# EUROPÄISCHE PATENTANMELDUNG

(11) **EP 0 894 647 A1**
(43) Veröffentlichungstag der Anmeldung: **03.02.1999**
(21) Anmeldenummer: 98112680.8
(22) Anmeldetag: 09.07.1998
(51) Int. Cl.: B60C 17/02

(54) **Sicherheitssysteme für Fahrzeugräder sowie Fahrzeugrad mit einem solchen System**

(30) Priorität: 30.07.1997 DE 19732711
(71) Anmelder: Luxi, Rita, 93128 Regenstauf (DE)
(72) Erfinder:
(74) Vertreter: Graf, Helmut, Dipl.-Ing.

(57) **Zusammenfassung**

Die Erfindung bezieht sich auf ein neuartiges Sicherheitssystem für Fahrzeugräder, die einen auf einer Felge montierten Reifen aufweisen.

## Beschreibung

Die Erfindung bezieht sich auf ein Sicherheitssystem für Fahrzeugräder. 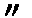 Fahrzeugräder" im Sinne der Erfindung sind grundsätzlich alle druckbereiften Räder mit einem mit Luft- oder Gasdruck beaufschlagten Reifen d.h. insbesondere Räder von Straßen- und Luftfahrzeugen, d.h. PKW-, LKW-, oder Flugzeugräder usw.. Weiterhin bezieht sich die Erfindung auf Fahrzeugräder mit einem solchen Sicherheitssystem.

Bei Fahrzeugreifen kann es durch eine Beschädigung oder aber durch Materialermüdung oder andere Umstände zu einem plötzlichem Druckabfall kommen, der dann bei fahrendem Fahrzeug zu gefährlichen Situationen führt, und zwar durch Einschränkung oder vollständigen Verlust der Lenkbarkeit des Fahrzeugs, durch Ausbrechen des Fahrzeugs usw.

Aufgabe der Erfindung ist es, ein Sicherheitssystem aufzuzeigen, welches diesen Nachteil vermeidet. Zur Lösung dieser Aufgabe ist ein System entsprechend dem Patentanspruch 1 ausgeführt. Die Erfindung bezieht sich weiterhin auf ein mit einem solchen System ausgestattetes Fahrzeugrad. Dieses ist entsprechend dem Patentanspruch 10 ausgeführt

Bei der Erfindung erfolgt bei einem Abfall des Reifendruckes unter einen vorgegebenen Schwellwert ein Auslösen der Druckgasquelle und damit ein abruptes Aufblasen des wenigstens einen Hilfsschlauches der Hilfsschlauchanordnung in der Form, daß der Reifen des defekten Rades durch den Hilfsschlauch zuverlässig abgestützt ist, bevor es durch einen Druckabfall des Reifendruckes überhaupt zu gefährlichen Situationen kommen kann.

Weiterbildungen der Erfindung sind Gegenstand der Unteransprüche. Die Erfindung wird im Folgenden anhand der Figuren an Ausführungsbeispielen näher erläutert. Es zeigen:

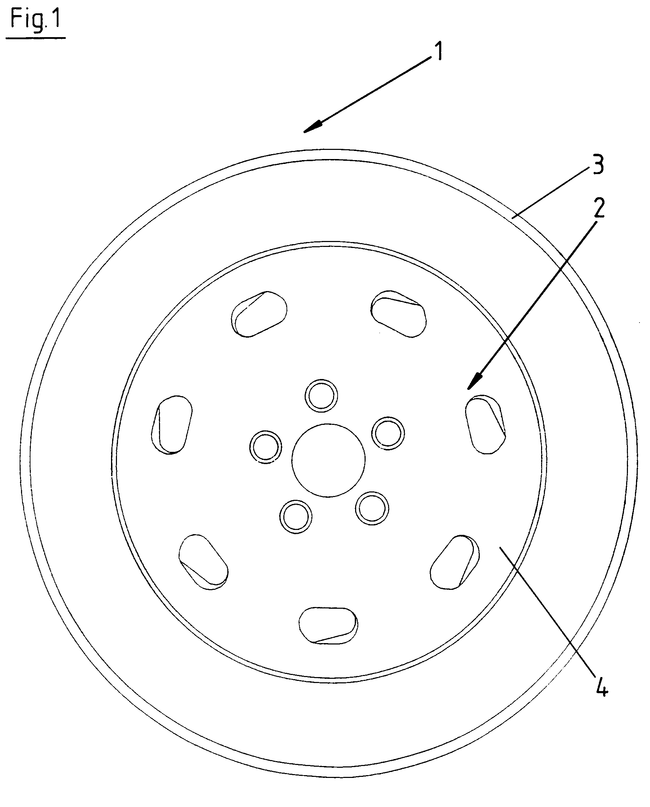

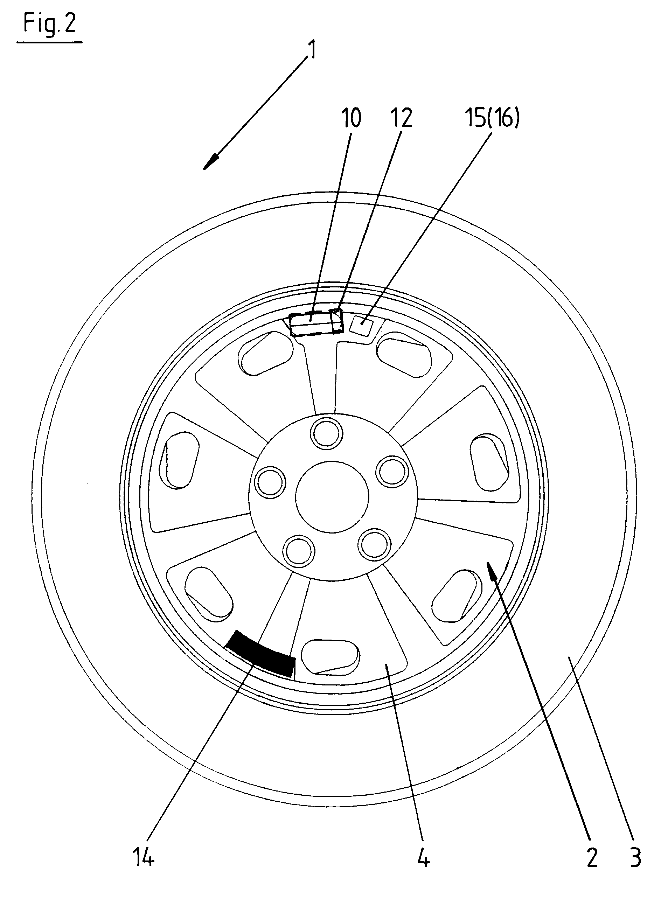

- Fig. 1 und 2: eine Außen- und Innenansicht eines Fahrzeugrades (PKW-Rad) bestehend aus einer Felge und einem auf dieser Felge angeordneten schlauchlosem Reifen;

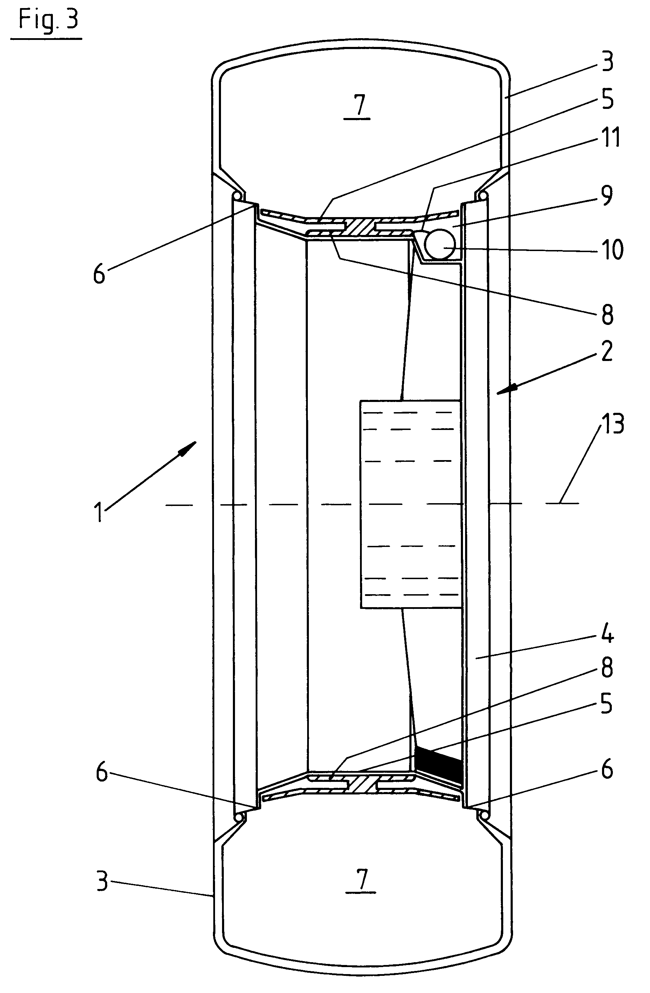

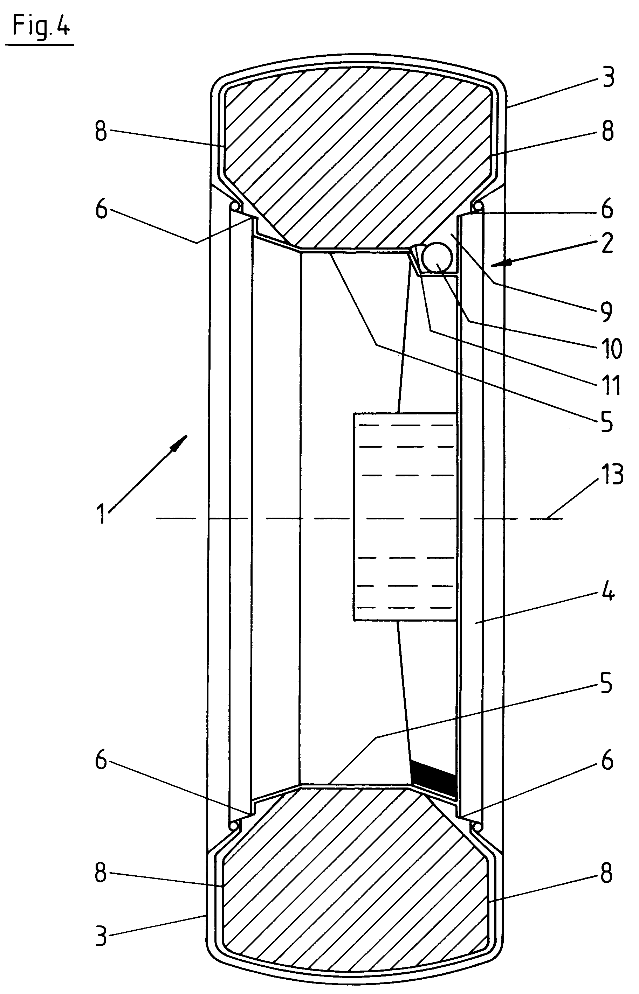

- Fig. 3 und 4: einen Schnitt durch das Rad der Figuren 1 und 2 im Normalzustand (Figur 3) sowie im aufgeblasenem Zustand des Reifen-Not- oder Hilfsschlauches.

In den Figuren ist 1 ein Fahrzeug- bzw. Kfz-Rad mit einer Felge 2 und mit einem üblichen Reifen 3, der schlauchlos auf die Felge 2 aufgezogen ist. Die Felge 2 besitzt die übliche Form, d.h. sie besteht aus einem scheibenartigen Felgenelement 4 und aus dem am Umfang dieses Felgenelementes vorgesehenen Felgengrund oder -bett 5, welches an der Innen- und Außenseite der Felge 2 jeweils durch ein Horn 6 begrenzt ist. In dem von dem Reifen 3 begrenzten Innenraum 7 ist an der dortigen Seite des Felgenbettes 5 ein druckdichter Hilfsschlauch 8 vorgesehen, der die Felge umschließt und am Felgenbett 5 anliegt. Dieser Hilfsschlauch 8 ist so gefaltet, daß er möglichst flach der Innenseite des Felgenbettes 5 benachbart liegt. Weiterhin ist der Hilfsschlauch 8 bei der dargestellten Ausführungsform mit einem Teilbereich seiner Außenfläche mit der dem Innenraum 7 zugewandten Seite des Felgenbettes 5 beispielsweise durch Kleben flächig verbunden.

Der Hilfsschlauch 8 besteht beispielsweise aus einem geeigneten hochfesten Flachmaterial, z.B. aus einem Kunststoffmaterial, bevorzugt aus Nylon. An einem Bereich ist der Felgengrund bzw. das Felgenbett 5 mit einer Vertiefung 9 versehen, in der eine Druckgaspatrone 10 mit einem Zündmechanismus versehen ist. Über einen Hochdruck-Schlauch 11 ist die Patrone 10 an dem Innenraum des Hilfsschlauches 8 angeschlossen, so daß dieser beim Zünden des Zündmechanismus der Patrone 10 durch das von der Patrone gelieferte Druckgas schlagartig aufgeblasen wird, und zwar derart, daß sich der Hilfsschlauch 8 am gesamten Umfang des Fahrzeugrades 1 innen gegen die Wandung des Reifens 3 anlegt und sich im Inneren des Hilfsschlauches 8 ein zumindest dem üblichen Reifendruck entsprechender Druck einstellt. Die Patrone 10 enthält vorzugsweise einen Stoff, der beim Zünden das Druckgas erzeugt. In der Vertiefung 9 ist weiterhin ein Druckfühler 12 untergebracht, der beispielsweise ebenfalls Bestandteil der Patrone 10 ist und der dann, wenn der Druck im Innenraum 7 unter einem vorgegebenen Schwellwert absinkt, das Zünden der Patrone 10 bewirkt.

Zum Massenausgleich ist an der der Patrone 10, dem Hochdruckschlauch 11 und dem Druckfühler 12 in Bezug auf die Radachse 13 gegenüberliegenden Seite der Felge 2 ein Ausgleichsgewicht 14 befestigt, und zwar beispielsweise an der der Radachse 13 zugewandten Seite des Felgenbettes 5 am Übergang zu dem radartigen Felgenelement 4.

Im Normalzustand, d.h. insbesondere bei nicht defektem Reifen 3, ist der Hilfsschlauch 8 durch den Reifen-Innendruck im flachem Zustand gehalten. Grundsätzlich besteht aber auch die Möglichkeit, Mittel vorzusehen sind, die den Hilfsschlauch 8 im zusammengefalteten, flachen Zustand halten, solange die Patrone 10 nicht aktiviert ist.

Im Falle eines plötzlichen Druckabfalls im Innenraum 7 z.B. durch eine Beschädigung des Reifens 3 beispielsweise durch äußere Einwirkung, durch Materialermüdung oder sonstige Umstände wird durch den Druckfühler 12 der Zündmechanismus der Patrone 10 ausgelöst. Dies führt zu einem schlagartigen Aufblasen des Hilfsschlauches 8, der sich dann gegen die Innenfläche des Reifens 3 anlegt und mit seinem Innen-Druck den Reifen 3 von innen her unterstützt, so daß das Fahrzeugrad 1 vollfunktionsfähig bleibt. Das Auslösen der Patrone 10 erfolgt vorzugsweise bei einem Reifendruck, der zwar deutlich unter dem vorgeschriebenen normalen Reifendruck liegt, aber noch ausreichend ist, damit das Fahrzeugrad 1 zumindest einigermaßen seine Funktion erfüllen kann. Das Aufblasen des Hilfsschlauches 8 erfolgt dann innerhalb von Millisekunden, und zwar ähnlich wie bei einem Airbag.

Das beschriebene Sicherheitssystem kann unter Verwendung von Bauteilen, die bereits auf dem Markt erhältlich sind aufgebaut werden. Sämtliche Elemente des Systems sind in dem vom Reifen 3 abgeschlossenen Innenraum 7 untergebracht, so daß auch keine zusätzlichen druckdichten Durchführungen in der Felge 2 usw. notwendig sind. Wesentlich ist bei diesem System auch, daß es völlig unabhängig von äußeren Steuer- und Versorgungseinrichtungen, insbesondere auch unabhängig von dem elektrischen Bordnetz des jeweiligen Fahrzeugs ist.

Grundsätzlich besteht aber auch die Möglichkeit, an der Patrone 10 einen Sender 15 vorzusehen, der beispielsweise drahtlos an einen am Fahrzeug vorgesehenen Empfänger ein Signal liefert, welches das Auslösen des Sicherheitssystems an einem bestimmten Fahrzeugrad optisch und/oder aktustisch anzeigt. Unabhängig hiervon oder zusätzlich hierzu kann auch an der Felge 2 eine Anzeige 16 vorgesehen sein, die den Zustand des Sicherheitssystems (nicht aktivierter Zustand oder aktivierter Zustand) anzeigt.

Um eine möglichst kurze Ansprechzeit zu erreichen, ist bei der beschriebenen Ausführungsform der Hilfsschlauch 8 so ausgebildet, daß er lediglich durch Aufblasen und ohne ein Dehnen seines Materials eine volle Abstützung des Reifens 3 im Notfall, d.h. bei einem Abfall des Reifendruckes bewirkt. Der Querschnitt des aufgeblasenen, nicht gedehnten Hilfsschlauches 8 ist dann wenigstens gleich den Innenquerschnitt des Reifens 3. Grundsätzlich besteht natürlich auch die Möglichkeit, den Hilfsschlauch 8 aus einem dehnbaren Material herzustellen, und zwar derart, daß er beim Auslösen der Patrone 10 zumindest teilweise unter elastischer Verformung des Materials des Hilfsschlauches 8 aufgeblasen wird.

Die Erfindung wurde voranstehend an einem Ausführungsbeispiel beschrieben. Es versteht sich, daß zahlreiche Änderungen sowie Abwandlungen möglich sind, ohne daß dadurch der der Erfindung zugrundeliegende Erfindungsgedanke verlassen wird.

### Bezugszeichenliste

- 1: Fahrzeugrad
- 2: Felge
- 3: Reifen
- 4: Felgenelement
- 5: Felgengrund oder Felgenbett
- 6: Horn
- 7: Innenraum
- 8: Hilfsschlauch
- 9: Vertiefung
- 10: Druckgaspatrone
- 11: Hochdruckschlauch
- 12: Druckfühler
- 13: Radachse
- 14: Gegengewicht
- 15: Sender
- 16: Anzeige

## Patentansprüche

1. Sicherheitssystem für Fahrzeugräder, die einen auf einer Felge (2) montierten Reifen (3) aufweisen, **gekennzeichnet** durch eine auf der Felge (2) bzw. im Felgenbett (5) im Inneren des Reifens (3) montierbare und die Felgenachse (13) umschließende Hilfsschlauchanordnung, die von wenigstens einem druckdichten Hilfsschlauch (8) gebildet ist, durch eine an der Felge (2) montierbare Druckquelle (10), die mit dem Innenraum des wenigstens einen Hilfsschlauches (8) verbunden ist und im aktivierten Zustand ein unter Druck stehendes Gas in den Innenraum des Hilfsschlauches (8) zum Aufblasen des Hilfsschlauches (8) liefert, sowie durch einen den Reifendruck (3) erfassenden Druckfühler (12), der die Druckquelle (10) zur Abgabe des Druckgases in den wenigstens einen Hilfsschlauch (8) aktiviert, wenn der Reifendruck unter einen vorgegebenen Schwellwert fällt.

2. System nach Anspruch 1, dadurch gekennzeichnet, daß die Druckquelle eine Druckgaspatrone mit einer Zündvorrichtung ist, die (Druckgaspatrone) beim Zünden der Zündvorrichtung das Druckgas liefert.

3. System nach Anspruch 1 oder 2, dadurch gekennzeichnet, daß die Hilfsschlauchanordnung von einem einzigen Hilfsschlauch (8) oder von wenigstens zwei Hilfsschläuchen (8) gebildet sind,
wobei vorzugsweise jeder Hilfsschlauch (8) mit wenigstens einer eigenen Druckgasquelle (10) verbunden ist.

4. System nach einem der vorhergehenden Ansprüche, dadurch gekennzeichnet, daß der Druckfüher (12) und/oder die Druckgasquelle bzw. Patrone (10) in dem von dem Reifen begrenzten Innenraum (7) montierbar sind.

5. System nach einem der vorhergehenden Ansprüche, dadurch gekennzeichnet, daß der Druckfüher (12) an der Druckgasquelle oder Patrone (10) vorgesehen ist.

6. System nach einem der vorhergehenden Ansprüche, dadurch gekennzeichnet, daß an der den Reifeninnenraum (7) begrenzenden Seite des Felgenbettes (5) wenigstens eine Vertiefung (9) zur Aufnahme der Druckgasquelle (10) und des Drucksensors (12) vorgesehen ist.

7. System nach einem der vorhergehenden Ansprüche, dadurch gekennzeichnet, daß Mittel (15, 16) zur Anzeige des Zustandes des Systems vorgesehen sind.

8. System nach einem der vorhergehenden Ansprüche, dadurch gekennzeichnet, daß der wenigstens eine Hilfsschlauch (8) im aufgeblasenem Zustand ohne oder im wesentlichen ohne Dehnung seines Materials einen Querschnitt aufweist, der wenigstens gleich dem Innenquerschnitt des Reifens (3) ist.

9. System nach einem der vorhergehenden Ansprüche, dadurch gekennzeichnet, daß der Hilfsschlauch (8) aus einem Flachmaterial, vorzugsweise aus Kunststoff, beispielsweise aus Nylon besteht.

10. Fahrzeugrad mit einer Felge (2) zum Montieren eines Reifens (3), dessen Innenraum mit einem Reifendruck beaufschlagbar ist, **gekennzeichnet** durch eine auf der Felge (2) bzw. im Felgenbett (5) im Inneren des Reifens (3) vorgesehene und die Felgenachse (13) umschließende Hilfsschlauchanordnung, die von wenigstens einem druckdichten Hilfsschlauch (8) gebildet ist, durch eine an der Felge (2) vorgesehene Druckquelle (10), die mit dem Innenraum des wenigstens einen Hilfsschlauches (8) verbunden ist und im aktivierten Zustand ein unter Druck stehendes Gas in den Innenraum des Hilfsschlauches (8) zum Aufblasen des Hilfsschlauches (8) liefert, sowie durch einen den Reifendruck (3) erfassenden Druckfühler (12), der die Druckquelle (10) zur Abgabe des Druckgases in den wenigstens einen Hilfsschlauch (8) aktiviert, wenn der Reifendruck unter einen vorgegebenen Schwellwert fällt.

11. Fahrzeugrad nach Anspruch 12, dadurch gekennzeichnet, daß die Druckquelle eine Druckgaspatrone mit einer Zündvorrichtung ist, die (Druckgaspatrone) beim Zünden der Zündvorrichtung das Druckgas liefert.

12. Fahrzeugrad nach Anspruch 10 oder 11, dadurch gekennzeichnet, daß die Hilfsschlauchanordnung von einem einzigen Hilfsschlauch (8) oder von wenigstens zwei Hilfsschläuchen (8) gebildet sind, wobei vorzugsweise jeder Hilfsschlauch (8) mit wenigstens einer eigenen Druckgasquelle (10) verbunden ist.

13. Fahrzeugrad nach einem der vorhergehenden Ansprüche, dadurch gekennzeichnet, daß der Druckfüher (12) und/oder die Druckgasquelle bzw. Patrone (10) in dem von dem Reifen begrenzten Innenraum (7) montiert oder montierbar sind.

14. Fahrzeugrad nach einem der vorhergehenden Ansprüche, dadurch gekennzeichnet, daß der Druckfüher (12) an der Druckgasquelle oder Patrone (10) vorgesehen ist.

15. Fahrzeugrad nach einem der vorhergehenden Ansprüche, dadurch gekennzeichnet, daß an der den Reifeninnenraum (7) begrenzenden Seite des Felgenbettes (5) wenigstens eine Vertiefung (9) zur Aufnahme der Druckgasquelle (10) und des Drucksensors (12) vorgesehen ist.

16. Fahrzeugrad nach einem der vorhergehenden Ansprüche, dadurch gekennzeichnet, daß Mittel (15, 16) zur Anzeige des Zustandes des Systems vorgesehen sind.

17. Fahrzeugrad nach einem der vorhergehenden Ansprüche, dadurch gekennzeichnet, daß der wenigstens eine Hilfsschlauch (8) im aufgeblasenem Zustand ohne oder im wesentlichen ohne Dehnung seines Materials einen Querschnitt aufweist, der wenigstens gleich dem Innenquerschnitt des Reifens (3) ist.

18. Fahrzeugrad nach einem der vorhergehenden Ansprüche, dadurch gekennzeichnet, daß der Hilfsschlauch (8) aus einem Flachmaterial, vorzugsweise aus Kunststoff, beispielsweise aus Nylon besteht.
